**Europäisches Patentamt**

(19) **European Patent Office**

**Office européen des brevets**

(11) Veröffentlichungsnummer: **0 135 119**
**B1**

# (12) EUROPÄISCHE PATENTSCHRIFT

(45) Veröffentlichungstag der Patentschrift:
**15.07.87**

(51) Int. Cl.⁴: **H 02 M 3/335**

(21) Anmeldenummer: **84109459.2**

(22) Anmeldetag: **08.08.84**

(54) **Sperrwandler-Schaltnetzteil.**

(30) Priorität: **19.08.83 DE 3330039**

(43) Veröffentlichungstag der Anmeldung:
**27.03.85 Patentblatt 85/13**

(45) Bekanntmachung des Hinweises auf die Patenterteilung:
**15.07.87 Patentblatt 87/29**

(84) Benannte Vertragsstaaten:
**AT BE DE FR GB IT NL**

(56) Entgegenhaltungen:
**EP - A - 0 046 515**
**EP - A - 0 072 661**
**US - A - 4 005 351**

(73) Patentinhaber: **Siemens Aktiengesellschaft Berlin und München, Wittelsbacherplatz 2, D-8000 München 2 (DE)**

(72) Erfinder: **Peruth, Günther, Dipl.-Ing.,**
**Franz-Wolter-Strasse 13, D-8000 München 81 (DE)**
Erfinder: **Lenz, Michael, Dipl.-Ing.,**
**Fischbachauerstrasse 3, D-8000 München 90 (DE)**

## Beschreibung

Die vorliegende Erfindung betrifft einen Sperrwandler-Schaltnetzteil für die Versorgung eines elektrischen Geräts, bei dem die Primärwicklung eines Transformators in Serie mit der stromführenden Strecke eines elektronischen Schalters an die durch Gleichrichtung der über zwei Versorgungsanschlüsse zugeführten Netzwechselspannung erhaltene Gleichspannung gelegt und eine Sekundärwicklung des Transformators zur Stromversorgung des elektrischen Geräts vorgesehen ist, bei dem ausserdem die Steuerelektrode des dreipoligen elektronischen Schalters durch den Ausgang einer Regelschaltung gesteuert ist, die ihrerseits durch die gleichgerichtete Netzwechselspannung über einen Strom-Spannungswandler als Istwert und durch einen Sollwertgeber beaufschlagt ist, bei der ferner eine Anlaufschaltung zur weiteren Steuerung der Steuerelektrode des elektronischen Schalters vorgesehen ist, und bei der schliesslich die Regelschaltung derart aufgebaut ist, dass ihre Stromversorgung mittels einer Sekundärwicklung des Transformators gegeben ist, die einerseits einen der Regelspannungserzeugung dienenden Schaltungsteil mit einem nachgeschalteten Regelverstärker und andererseits einen der Impulsaufbereitung dienenden Schaltungsteil enthält, wobei sowohl der Ausgang des Regelverstärkers als auch der Ausgang der Impulsaufbereitungsanlage an je einen Eingang eines die Steuerelektrode des elektronischen Schalters beaufschlagenden und den Ausgang der Regelschaltung bildenden Pulsdauer-Modulators geschaltet ist, während ein dritter Eingang des Pulsdauer-Modulators von dem Strom-Spannungswandler beaufschlagt ist.

Ein solcher Sperrwandler-Schaltnetzteil ist z.B. in der EP-A-0 046 515 (DE-OS 3 032 034) beschrieben. Ferner kann als Stand der Technik «Funkschau (1975), H. 5, S. 40 - 43», oder das Buch von Wüstehube u.a. mit dem Titel «Schaltnetzteile» (erschienen 1979 im expert-Verlag-VDE-Verlag (vgl. insbesondere S. 87 ff. ) oder Siemens «Schaltnetzteile mit der IS TDA 4600», S. 7 ff., genannt werden.

Bekanntlich hat ein solcher Schaltnetzteil die Aufgabe, ein elektronisches Gerät, z.B. einen Fernsehempfänger, mit stabilisierten und geregelten Betriebsspannungen zu versorgen. Der Kern eines solchen Schaltnetzteils ist deshalb durch eine Regelschaltung gegeben, deren Stellglied durch den eingangs genannten und insbesondere durch einen bipolaren Leistungstransistor realisierten dreipoligen elektronischen Schalter gegeben ist. Weiter ist eine hohe Arbeitsfrequenz und ein auf hohe Betriebsfrequenz ausgerichteter Transformator vorgesehen, da im allgemeinen eine weitgehende Absonderung des zu versorgenden elektrischen Geräts vom Versorgungsnetz erwünscht ist. Solche Schaltnetzteile können entweder nach dem synchronisierten Betrieb oder nach dem selbstschwingenden Betrieb ausgelegt sein. Letzteres gilt für einen Schaltnetzteil, wie er in der EP-A-0 046 515 beschrieben ist und mit dem sich auch die Erfindung befasst.

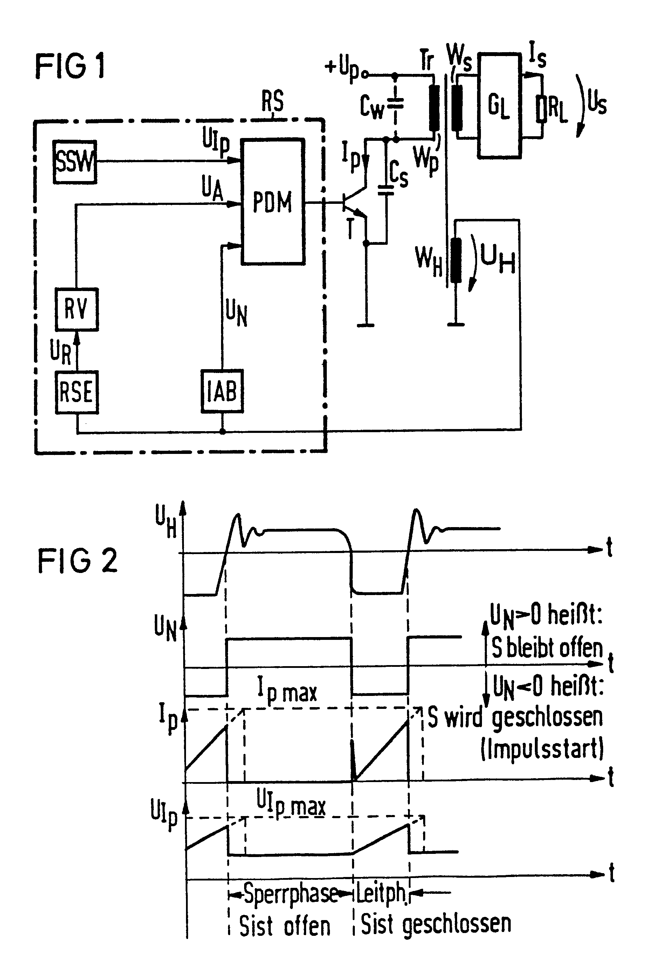

Das zu einem solchen Schaltnetzteil als Stand der Technik gehörende Prinzipschaltbild ist in Fig. 1 dargestellt, auf die zunächst eingegangen werden soll.

Ein npn-Leistungstransistor dient in dem dargestellten Fall als Stellglied T für die Regelschaltung RS und ist mit seiner Emitter-Kollektorstrecke in Serie mit der Primärwicklung eines Transformators Tr geschaltet. Andererseits könnte als Stellglied T auch ein anderes dreipoliges Schaltelement, z.B. ein Thyristor oder ein Leistungs-MOS-Feldeffekttransistor, verwendet werden. Unter Bezug auf die Fig. 1 in der EP-A-0 046 515 kann dabei festgestellt werden, dass die diese Serienschaltung betreibende Gleichspannung durch Gleichrichtung der vom Wechselstromnetz gelieferten Wechselspannung mittels einer Gleichrichterschaltung, z.B. einer Grätzschaltung, erhalten wird. Im Falle der Verwendung eines npn-Transistors als Schalter T liegt dabei der Emitter dieses Transistors am Bezugspotential, der Kollektor an der Primärwicklung $W_p$ des Transformators Tr und das andere Ende dieser Primärwicklung an dem von der genannten (aber in der Zeichnung nicht dargestellten) Gleichrichterschaltung gelieferten Versorgungspotential $+ U_p$. Die Emitter-Kollektorstrekke des Transistors T ist von einem Kondensator $C_s$ überbrückt, während die an der Primärwicklung $W_p$ liegende Kapazität $C_w$ parasitärer Natur ist. Der Leistungstransistor T ist an seiner Basis durch den Ausgangsteil der eingangs genannten Regelschaltung, d.h. durch den in dieser vorgesehenen Pulsdauer-Modulator PDM, gesteuert. Bei Verwendung eines anderen dreipoligen elektronischen Schalters als Schalter T wird dessen Steuerelektrode entsprechend der Basiselektrode, dessen Stromeingangselektrode entsprechend dem Emitteranschluss und dessen Stromausgangselektrode entsprechend dem Kollektor des in Fig. 1 dargestellten npn-Transistors T geschaltet.

Eine Hilfswicklung $W_H$ des Transformators Tr dient als Sensor für die Regelschaltung und liegt daher mit dem einen Ende an dem besagten Bezugspotential und mit dem anderen Ende am Eingang der Regelschaltung RS. Eine weitere Sekundärwicklung $W_s$ bildet die eigentliche Sekundärseite des Sperrwandler-Transformators Tr, die zur Beaufschlagung einer Gleichrichteranlage GL und letztere zur Beaufschlagung eines elektrischen Geräts $R_L$ vorgesehen ist. Die von der Gleichrichteranlage GL gelieferte Gleichspannung ist im folgenden mit $U_s$ bezeichnet.

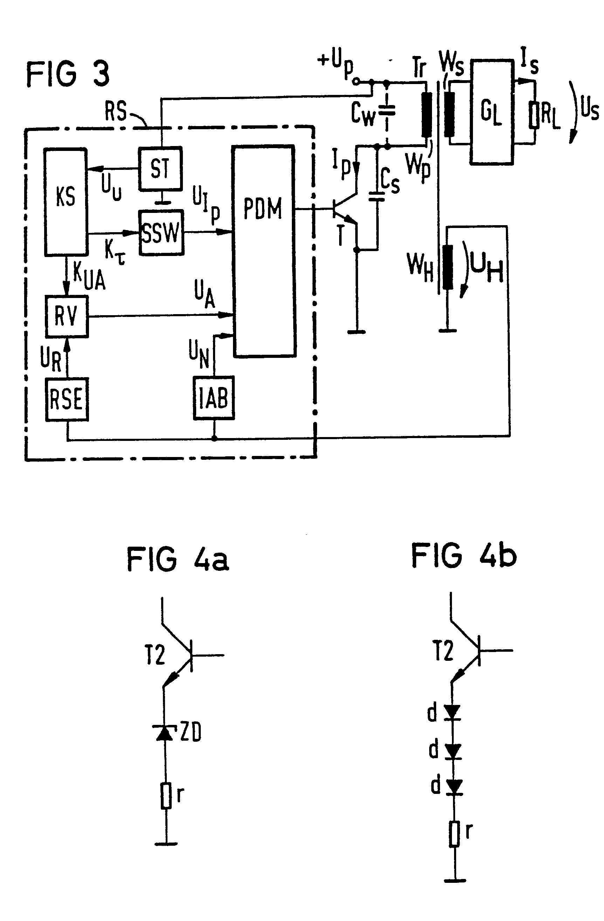

Wie bereits eingangs angedeutet, besteht die Regelschaltung RS aus dem den Transformator T steuernden und als Pulsdauer-Modulator ausgebildeten Ausgangsschaltungsteil PDM und zwei durch die Hilfswicklung $W_H$ gesteuerten Eingangsteilen, wobei der eine Eingangsteil RSE der Regelspannungserzeugung dient und über einen Regelverstärker RV ein Steuersignal $U_A$ für den Ausgangsteil PDM abgibt. Der andere Eingangsteil IAB dient der Impulsaufbereitung und liefert ein Signal $U_N$ an den Ausgangsteil PDM der Regelschaltung RS. Schliesslich ist noch ein Strom-Spannungswandler SSW vorgesehen, der die Istwertsteuerung der Regelschaltung RS bildet und eine dem Primärstrom $I_p$ proportionale Spannung $U_{Ip}$ an den Pulsdauer-Modulator PDM abgibt. Die zuletzt genannten Teile der Regelschaltung RS sind ebenfalls in der EP-A-0 046 515 angegeben. Sie gehören zu der dort in Fig. 3 dargestellten Regelschaltung. Die Regelspannungserzeugung ist durch die dort aus Fig. 1 und 2 ersichtlichen Widerstände R5 und R4 gegeben. Die Impulsaufbereitung IAB besteht aus der in Fig. 3 der DE-OS ersichtlichen Nulldurchgangsidentifikation und der durch sie beaufschlagten Steuerlogik. Der Pulsdauer-Modulator PDM ist schliesslich durch die in der EP-A-0 046 515 angedeutete Triggerschaltung mit dem durch sie beaufschlagten Teil der Steuerlogik gegeben.

Das zu einer Schaltung gemäss Fig. 1 der vorliegenden Anmeldung gehörende Zeitdiagramm, also das zeitliche Verhalten der in der Regelschaltung RS auftretenden Signale $U_H$ (= das von der Transformatorwicklung zur Steuerung der Regelschaltung abgegebene Signal), $U_N$ (= das von der Impulsaufbereitung IAB gelieferten Signal), $I_p$ (= der von der mit dem Schalttransistor T in Serie liegenden Transformatorwicklung $W_p$ gelieferte Strom) und $U_{Ip}$ (= das vom Strom-Spannungswandler SSW gelieferte Istwert-Signal) ist in Fig. 2 dargestellt.

Ersichtlich liefert die von der Transformatorwicklung $W_H$ gelieferte Spannung $U_H$ mit dem Nulldurchgang ($U_H$ = 0 V) die Information, dass die im Transformator Tr gespeicherte Energie abgeflossen ist und ein neuer Ladezyklus beginnen, d.h. der durch den Transistor T gegebene Schalter geschlossen werden kann. Über die Impulsaufbereitungsstufe IAB wird diese Information dem Pulsdauer-Modulator PDM mitgeteilt. (Es gilt dabei: $U_N$ < 0 V → Impulsstart, $U_N$ > 0 V → kein Impulsstart möglich.)

Weiterhin gewinnt man aus der von der Wicklung $W_H$ des Transformators Tr gelieferten Signalspannung $U_H$ mit Hilfe des Regelspannungserzeugers RSE eine zur Sekundärspannung $U_s$ proportionale Regelspannung $U_R$. Im Regelverstärker RV wird die Regelspannung mit einer Referenz verglichen. Die Differenz zwischen der Regelspannung $U_R$ und der Referenz wird vom Regelverstärker verstärkt und durch die vom Ausgang des Regelverstärkers RV gelieferte Signalspannung $U_A$ dem Pulsdauer-Modulator PDM mitgeteilt, der sie mit dem Signal $U_{Ip}$ des Strom-Spannungswandlers SSW vergleicht und den durch den Transformator T gegebenen Schalter öffnet, sobald $U_{Ip} \geq U_A$ gilt. Auf diese Weise wird der Spitzenwert $I_{pmax}$ von $I_p$ so lange korrigiert, bis die Differenz zwischen $U_R$ und der Referenzspannung verschwindet. Dies bedeutet, dass $U_R$ und damit $U_s$ konstant bleiben.

In Fig. 2 sind, wie bereits oben erwähnt, die wichtigsten Signale der Schaltung gemäss Fig. 1 dargestellt. Hinsichtlich des Wirkungsprinzips kann auch auf das genannte Buch von Wüstehube hingewiesen werden.

In der Praxis wird nun von einem Schaltnetzteil Kurzschlussfestigkeit bezüglich $U_s$ gefordert. Dies bedeutet, dass mit dem Überschreiten eines bestimmten Werts $I_{smax}$ für den Sekundärgleichstrom die Sekundärspannung $U_s$ zusammenbricht. Es ist deshalb eine Leistungsbegrenzung für den Betrieb des Schaltnetzteils erforderlich.

In den meisten Fällen begrenzt man zu diesem Zweck die Ausgangsspannung $U_A$ des Regelverstärkers RV oder regelt sie sogar zurück (Formung eines Überlastdiagramms).

Geht man von dem einfachen Fall der Leistungsbegrenzung aus, so gilt für die maximale Sekundärleistung $P_{smax}$ die Beziehung

$$(1) \qquad P_{smax} = U_s \cdot I_{smax} = (\eta \cdot W_{pmax})/T_{max},$$

wobei

$I_{smax}$ = maximaler Sekundärstrom,
$\eta$ = Wirkungsgrad,
$W_{pmax}$ = die primär aufgenommene Energie und
$T_{max}$ = Periodendauer der Schaltnetzteilschwingung, wenn der Sekundärstrom $I_s$ den Wert $I_{smax}$ hat, bedeuten.

Die weitere Betrachtung zeigt, dass $I_{smax}$ von der Primärspannung $U_p$ abhängig ist. Legt man nämlich den Schaltnetzteil für einen bestimmten Bereich der Primärspannung $U_p$ aus, so muss man den Transformator Tr des Wandlers für zu übertragende Leistungen dimensionieren, die jedoch im ungünstigen Fall bei weitem nicht ausgenutzt werden können. So muss man z.B. den Schaltnetzteil im Spannungsbereich 90 V~ $\leq U_p \leq$ 270 V~ mit einem Transformator Tr versehen, der etwa um 100% überdimensioniert sein muss, um im gesamten Spannungsbereich eine bestimmte Leistung abgeben zu können.

Verwendet man die Gleichung (1) zusammen mit den weiteren Beziehungen

$$(2) \qquad W_{pmax} = (L_p \cdot I_{pmax}^2)/2$$

($I_{pmax}$ = Spitzenwert des Stroms $I_p$ bei einer Pulsbreite $t_p$, die gleich der maximalen Primärpulsbreite $t_{pmax}$ für den an die Steuerelektrode des Stellglieds T gelegten Impuls bei einer Spannung $U_A$ an dem vom Regelverstärker RV gesteuerten Eingang des Pulsdauer-Modulators PDM, die gleich ihrem maximalen Wert $U_{Amax}$ ist; $L_p$ = Induktivität der Primärwicklung),

$$(3) \qquad I_{pmax} = (t_{pmax} \cdot U_p)/L_p,$$

$$(4) \qquad T_{max} = T_{pmax}/\upsilon,$$

wobei $\upsilon$ das durch die Beziehung

$$(5) \qquad \upsilon = 1/(1 + U_p/\ddot{u} \cdot U_s)$$

($\ddot{u}$ = Übersetzungsverhältnis des Transformators Tr) definierte Tastverhältnis bedeutet, zur Ermittlung des Maximalwerts für den Sekundärstrom $I_s$, so erhält man die Beziehung

$$(6) \qquad I_{smax} = (\eta \cdot t_{pmax} \cdot U_p^2 \cdot \upsilon)/(2U_s \cdot L_p).$$

Die maximale Primärpulsbreite $t_{pmax}$ wird bei der in Fig. 1 dargestellten Schaltung eines Sperrwandlers durch den Stromspannungswandler SSW bestimmt.

Ferner soll in Anbetracht der zu verwendenden Schaltung angestrebt werden, dass die Relation

$$I_p \cdot L_p = U_{Ip} \cdot \tau_{ssw}$$

erfüllt ist ($\tau_{ssw}$ = Zeitkonstante des Strom-Spannungswandlers SSW in der Regelschaltung). Dies bedeutet, dass der Strom-Spannungswandler SSW vermittels seiner Zeitkonstanten $\tau_{ssw}$ eine dem Primärstrom $I_p$ proportionale Spannung $U_{Ip}$ liefert, wenn $L_p$ und $\tau_{ssw}$ konstant bleiben.

Mit Hilfe der Gleichung (3) erhält man allgemein:

$$t_p = (I_p \cdot L_p)/U_p = (U_{Ip} \cdot \tau_{ssw})/U_p$$

und für den Fall, dass die vom Strom-Spannungswandler SSW gelieferte Spannung $U_{Ip}$ maximal wird, wegen

$$U_{Ipmax} = U_{Amax},$$

$$(7) \quad t_{pmax} = (U_{Amax} \cdot \tau_{ssw})/U_p.$$

Mit Hilfe von Gleichung (5) bis Gleichung (7) erhält man

$$(8) \quad I_{smax} = (U_{Amax} \cdot \tau_{ssw} \cdot \eta)/ \\ (2U_s \cdot L_p \cdot ((1/U_p) + (1/(\ddot{u} \cdot U_s)))).$$

Aus Gleichung (8) ist zu ersehen, dass der maximale Sekundärstrom $I_{smax}$ mit grösser werdender Primärspannung $U_p$ ansteigt, dass also eine direkte Proportionalität vorliegt.

Dies ist der oben genannte Nachteil, der dazu zwingt, für hohe Primärspannungen $U_p$ Sekundärleistungen bei der Dimensionierung des Transformators Tr zu berücksichtigen, die in Wirklichkeit nicht gebraucht werden.

Die vorliegende Erfindung befasst sich nun mit der Aufgabe, eine günstigere Lösung des genannten Problems zu erreichen, so dass eine Überdimensionierung des Transformators Tr nicht erforderlich ist.

Hierzu ist ein der eingangs gegebenen Definition entsprechender Sperrwandler-Schaltnetzteil aufgrund der vorliegenden Erfindung derart ausgestaltet, dass das dem dreipoligen elektronischen Schalter T abgewandte Ende der Primärwicklung $W_p$ des Transformators Tr über einen Spannungsteiler mit dem Bezugspotentialanschluss verbunden und wenigstens ein Teilerpunkt des Spannungsteilers an den Eingang einer Korrekturschaltung gelegt ist, die ihrerseits zur Steuerung des Regelverstärkers RV und/oder der Istwertsteuerung, d.h. des Strom-Spannungswandlers SSW in der Regelschaltung RS vorgesehen und so ausgestaltet ist, dass aufgrund der von ihr bewirkten Steuerung ein vorgegebenes Maximum für die an der Sekundärwicklung $W_s$ des Transformators Tr entnehmbare Leistung unabhängig von der Versorgungsspannung $U_p$ wird.

Es wird also bei der vorliegenden Erfindung durch eine geeignet ausgebildete Korrekturschaltung eine Stabilisierung des $I_s$-Knickpunkts, durch dessen Abhängigkeit von der Primärspannung $U_p$ der genannte Nachteil bedingt ist, erreicht. Dabei hat man die Möglichkeiten

1. den Wert von $U_{Amax}$ oder

2. den Wert von $\tau_{ssw}$ oder

3. sowohl $U_{Amax}$ als auch $\tau_{ssw}$

mittels der Korrekturschaltung derart zu beeinflussen, dass die Beziehung

$$(9) \quad (U_{Amax} \cdot \tau_{ssw})/((1/U_p) + (1/(\ddot{u} \cdot U_s))) = K$$

gilt, wobei K durch die Beziehung

$$(9a) \quad K = (I_{smax} \cdot 2U_s \cdot L_p)/\eta$$

gegeben ist. (Der zu beeinflussende $I_s$-Knickpunkt wird auch als Umkehrpunkt bezeichnet, wenn die vom Regelverstärker RV an den Pulsdauer-Modulator PDM gelieferte Spannung $U_A$ nicht nur begrenzt sondern zurückgeregelt wird.)

Benutzt man dabei die erste Möglichkeit, so gilt wegen (9)

$$(10) \quad U_{Amax} = (K \cdot ((1/U_p) + (1/(\ddot{u} \cdot U_s)))/\tau_{ssw}.$$

Bei der zweiten Möglichkeit hat man

$$(11) \quad \tau_{ssw} = (K \cdot ((1/U_p) + (1/(\ddot{u} \cdot U_s))))/U_{Amax}$$

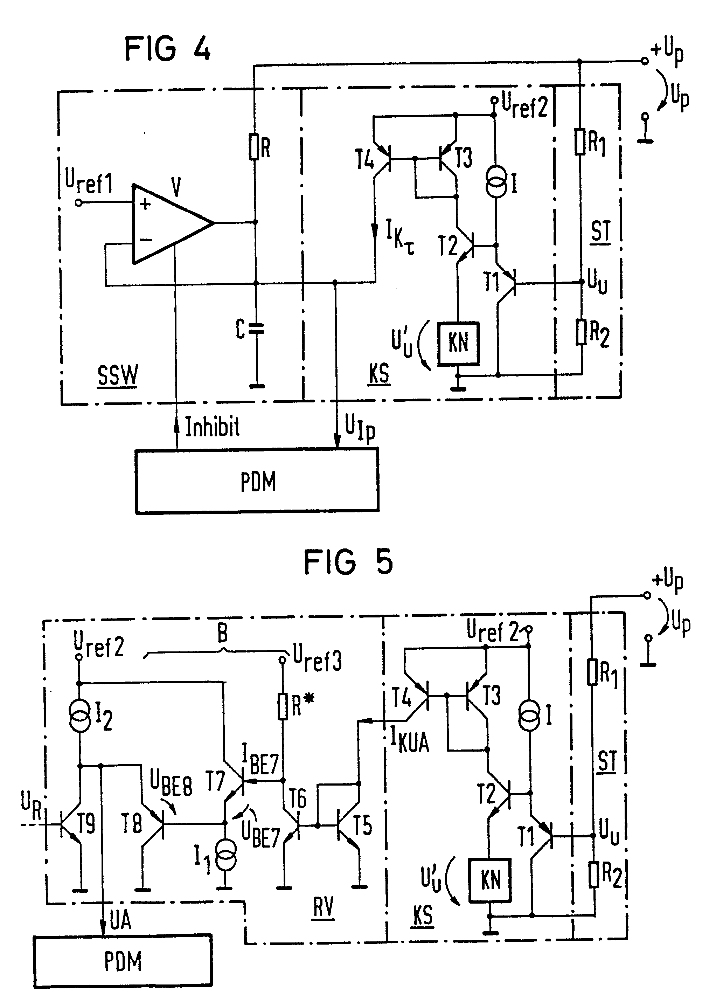

Die in Fig. 3 dargestellte Ausgestaltung einer Anordnung gemäss der vorliegenden Erfindung sieht beide Fälle gleichzeitig vor und entspricht somit der Möglichkeit 3. Eine vorteilhafte Ausgestaltung für die Anwendung der zweiten Möglichkeit ist in Fig. 4 und für die Anwendung der ersten Möglichkeit in Fig. 5 dargestellt.

Bei dem in Fig. 3 dargestellten Blockschaltbild, das im wesentlichen mit dem Blockschaltbild gemäss Fig. 1 übereinstimmt, hat man also den Spannungsteiler ST, der an seinem einen Ende durch das Potential $+U_p$ (das auch an dem vom Schalttransistor T abgewandten Anschluss der Primärwicklung $W_p$ des Transformators Tr liegt) beaufschlagt ist und mit dem anderen Ende am Bezugspotential (Masse) liegt. Vom Teilerpunkt des Spannungsteilers ST geht eine Spannung $U_u$ zur Korrekturschaltung KS, die ihrerseits mit einem Signal $K_{UA}$ auf den Regelverstärker RV bzw. mit einem Signal $K\tau$ auf den Strom-Spannungswandler SSW einwirkt. Im Falle der Fig. 3 sind die beiden Möglichkeiten 1 und 2 berücksichtigt.

Es besteht nun die Möglichkeit, die Korrekturschaltung KS so auszugestalten, dass sie sich für die beiden Möglichkeiten zugleich anwenden lässt. Die Korrekturschaltung hat dann vorteilhaft den aus Fig. 4 ersichtlichen Aufbau, der auch bei der Schaltung gemäss Fig. 5 — zusammen mit dem Spannungsteiler ST — Anwendung findet.

Bei der in Fig. 4 gezeigten Ausgestaltung hat man den aus zwei Widerständen R1 und R2 in Serie bestehenden Spannungsteiler ST, der mit seinem durch den einen Anschluss von $R_1$ gegebenen Ende an dem von dem Netzgleichrichter (nicht gezeichnet) gelieferten Potential $+U_p$, das an dem von T abgewandten Ende von $W_p$ entsteht, beaufschlagt ist. Mit dem durch den einen Anschluss von $R_2$ gegebenen anderen Ende liegt der Spannungsteiler ST am Bezugspotential und mit seinem durch die miteinander verbundenen beiden anderen Anschlüsse von $R_1$ und $R_2$ gegebenen Teilerpunkt am Eingang der Korrekturschaltung KS. Dieser ist durch die Basis eines pnp-Transistors T1 gegeben, dessen Kollektor mit dem Bezugspotential verbunden ist. Die den Eingang der Korrekturschaltung KS steuernde Teilerspannung ist mit $U_u$ bezeichnet.

Der Emitter des Eingangstransistors T1 der Kontrollschaltung KS liegt einerseits über eine in üblicher Weise (z.B. durch einen Transistor) dargestellte Konstantstromquelle I an einem (mit dem Bezugspotential eine Referenzspannung definierenden) Referenzpotential $U_{ref2}$ und andererseits an der Basis eines npn-Transistors T2. Über ein Korrekturnetzwerk KN besteht eine Verbindung zwischen dem Emitter des npn-Transistors T2 und dem Anschluss für das Bezugspotential, während der Kollektor von T2 einen aus den beiden pnp-Transistoren T3 und T4 bestehenden Stromspiegelverstärker steuert. Der Fusspunkt dieses Stromspiegelverstärkers T3, T4 ist durch den das genannte Referenzpotential $U_{ref2}$ liefernden Anschluss der Kontrollschaltung KS gegeben, während der als Diode geschaltete Eingangstransistor T3 des Stromspiegels mit seinem Kollektor und seiner Basis einerseits mit dem Kollektor des npn-Transistors T2 und andererseits mit der Basis des pnp-Transistors T4 verbunden ist, der mit seinem Kollektor den Ausgang des Stromspiegels und der Korrekturschaltung KS bildet und den Strom $I_{K\tau}$ liefert.

Das Korrekturnetzwerk KN kann im einfachsten Fall aus einem den Emitter von T2 mit dem Bezugspotential verbindenden Widerstand bestehen. Günstiger ist jedoch eine Ausgestaltung wie sie in Fig. 4a bzw. 4b gezeigt ist und auf die noch näher eingegangen wird. Der Spannungsabfall, der sich am Kontrollnetzwerk KN ausbildet, ist mit $U_{\ddot{u}}'$ bezeichnet.

Bei der aus Fig. 4a ersichtlichen Ausgestaltung des Korrekturnetzwerks liegt ein Widerstand r einerseits am Bezugspotential und andererseits an der Anode einer Zenerdiode ZD, deren Kathode mit dem Emitter des genannten npn-Transistors T2 verbunden ist. Bei der aus Fig. 4b ersichtlichen Form für das Korrekturnetzwerk KN ist die Zenerdiode ZD durch eine aus drei gleichorientierten Dioden d gebildeten Reihenschaltung ersetzt, wobei der Emitter des Transistors T2 mit der Anode der ersten dieser Dioden d und die Kathode der letzten Diode d mit dem die Verbindung zum Bezugspotential darstellenden Widerstand r verbunden ist. Anstelle der beschriebenen Ausführungsbeispiele für das Korrekturnetzwerk KN wäre u.a. auch die Parallelschaltung von Dioden mit Widerständen oder einer Zenerdiode mit einem Widerstand oder die Kombination von Serien- und Parallelschaltungen mit Vorteil anwendbar. Durch eine bzw. mehrere in einem solchen Korrekturnetzwerk KN vorgesehene Diode bzw. Zenerdiode entsteht eine Knickkennlinie. Durch diese wird der Verlauf der Korrekturfunktion der Korrekturschaltung KS so beeinflusst, dass der Knickpunkt des Sekundärstroms $I_s$ von der Primärspannung $U_p$ unabhängig wird. Es wird also mit anderen Worten durch das Korrekturnetzwerk eine nichtlineare Kennlinie der Korrekturschaltung gebildet, die sich entsprechend Gleichung (10) bzw. Gleichung (11) verhält.

Die Kurrekturschaltung KS und der sie beaufschlagende Spannunsteiler ST können bei der in Fig. 5 dargestellten und die Möglichkeit 1 ausnutzenden Ausführung, wie bereits oben angedeutet, ebenfalls mit Vorteil verwendet werden.

Bei der in Fig. 4 dargestellten Ausgestaltung eines Sperrwandler-Schaltnetzteils gemäss der vorliegenden Erfindung kommt es auf die dort gezeigte Ausgestaltung des Strom-Spannungswandlers SSW an. Die wesentlichen Teile des Stromspannungswandlers sind ein Operationsverstärker V, ein Widerstand R und ein Kondensator C. Beim Operationsverstärker V ist der Ausgang auf den invertierenden Eingang rückgekoppelt und der nichtinvertierende Eingang durch ein weiteres Referenzpotential $U_{ref1}$ beaufschlagt. Ausserdem ist der Ausgang des Operationsverstärkers V über den Widerstand R an das Potential $U_p$ gelegt. Ferner bilder der genannte Kondensator C die Verbindung zwischen dem Ausgang des Operationsverstärkers V zur Klemme für das Bezugspotential.

Die erfindungsgemässe Korrektur des Strom-Spannungswandlers SSW durch den Ausgang der Korrekturschaltung KS (also dem Kollektor von T4) durch dessen Ausgangsstrom $I_{k\tau}$ geschieht, indem dieser Ausgang von KS unmittelbar mit dem Ausgang des Strom-Spannungswandlers verbunden ist. Dies bedeutet, dass die vom Ausgang des Strom-Spannungswandlers SSW (= Ausgang des Operationsverstärkers V) gelieferte Spannung $U_{Ip}$, die für die Beaufschlagung des Pulsdauer-Modulators PDM vorgesehen ist, durch den vom Ausgang der Korrekturschaltung KS gelieferten Strom $I_{k\tau}$ im Sinne von Gleichung (11) korrigiert wird. Schliesslich ist noch eine Rücksteuerung des Pulsdauer-Modulators PDM auf den Operationsverstärker V durch ein Inhibitsignal vorgesehen, damit während der Leitphase des den dreipoligen elektronischen Schalter T bildenden Leistungstransistors der Operationsverstärker V abgeschaltet werden kann.

Mit dem Operationsverstärker V, der als Spannungsfolger geschaltet ist, wird die Spannung $U_{Ip}$, die vom Strom-Spannungswandler SSW an den Pulsdauer-Modulator PDM weitergegeben wird, auf $U_{ref1}$ (Spannung am nichtinvertierenden Eingang des Operationsverstärkers V) während der Sperrphase des Wandlers ausgeregelt. In der Leitphase aktiviert der Pulsdauer-Modulator PDM die Inhibitleitung des Operationsverstärkers V und schaltet dessen Ausgang in den hochohmigen dritten Zustand um. Mit der Bedingung $U_p \gg \Delta U_{Ipmax}$ ($\Delta U_{Ipmax} = U_{Ipmax} - U_{ref1}$) steigt die Spannung $U_{Ip}$ linear gemäss der Beziehung

$$\Delta U_{Ip} / \Delta t \approx U_p / R\,C$$

($\Delta U_{Ip}$ = Änderung von $U_{ip}$ und $\Delta t$ zugehöriges Zeitintervall) an. Für den Primärstrom $I_p$ gilt dann

$$\Delta I_p / \Delta t = U_p / L_p.$$

Durch Gleichsetzen erhält man die gewünschte Proportionalität

$$L_p \cdot I_p = \tau_{ssw} \cdot U_{Ip}$$

mit

$$\tau_{ssw} = (R \cdot C).$$

Speist man in den Knotenpunkt zwischen R und C einen Korrekturstrom $I_{k\tau}$ ein, so wird $\tau_{ssw}$ in dem gewünschten Sinn beeinflusst. Dazu ist es notwendig, dass die Spannung $U_p$ mit dem Spannungsteiler ST auf den Spannungswert $U_u$ heruntergeteilt sowie mittels der Transistoren T1, T2, der Stromquelle I entkoppelt und durch das Korrekturnetzwerk KN mit einem entsprechenden Strom-Spannungsverhalten in einen Strom umgewandelt wird, der dann an $U_{ref2}$ (z.B. die Versorgungsspannung der Regelschaltung RS) mit Hilfe der Transistoren T3 und T4 gespiegelt wird und dann die Zeitkonstante $\tau_{ssw}$ des Strom-Spannungswandlers SSW im Sinne der Gleichung (11) korrigiert.

Bei der in Fig. 5 dargestellten Ausführungsform eines Schaltnetzteils gemäss der Erfindung wird der Wert von $U_{Amax}$ durch die Korrekturschaltung KS korrigiert, wobei diese im Sinne der Gleichung (10) arbeitet. Dabei ist, wie oben bemerkt, die Ausgestaltung des Spannungsteilers ST und der Korrekturschaltung dieselbe, wie in Fig. 4. Erweitert ist hingegen die sonst übliche Ausgestaltung des Regelverstärkers RV durch eine Begrenzerschaltung B. Von dem Regelverstärker RV ist nur der Ausgangstransistor T9 gezeichnet, dessen Emitter am Bezugspotential liegt und dessen Basis durch die vom Regelspannungserzeuger RSE gelieferte Spannung $U_R$ gesteuert ist.

Sein Kollektor liegt in Serie mit einer Konstantstromquelle $I_2$ an einem Versorgungspotential $U_{ref2}$. Der Kollektor des Transistors T9 liefert die Spannung $U_A$ einerseits an den für die Steuerung durch den Regelverstärker RV vorgesehenen Eingang des Pulsdauer-Modulators PDM und andererseits an den Emitter eines pnp-Transistors T8, der als Begrenzer bezüglich $U_A$ wirkt und dessen Kollektor am Bezugspotential liegt.

Die Basis des zuletzt genannten pnp-Transistors T8 ist mit dem Emitter eines weiteren npn-Transistors T7 verbunden, dessen Kollektor an dem durch $U_{ref2}$ beaufschlagten Ende der Konstantstromquelle $I_2$ und dessen Emitter ausser an der genannten Verbindung zu T8 am Ausgang einer weiteren Konstantstromquelle $I_1$ liegt, deren Fusspunkt durch das Bezugspotential gegeben ist. Die Basis des zuletzt genannten npn-Transistors T7 ist durch den Ausgang eines npn-Transistor-Stromspiegels gesteuert. Der Eingang dieses npn-Stromspiegels, der durch den als Diode geschalteten npn-Transistor T5 gegeben ist, wird durch den Kollektor und die Basis dieses Transistors T5 gebildet und liegt unmittelbar am Ausgang der Korrekturschaltung KS (d.h. am Ausgang des npn-Stromspiegels T3, T4), während sein Fusspunktpotential mit dem Bezugspotential des Schaltnetzteils identisch ist. Der durch den Kollektor des npn-Transistors T6 gegebene Ausgang des npn-Stromspiegels im Begrenzerteil B des Regelverstärkers ist ausserdem über einen Widerstand R* an ein weiteres Referenzpotential $U_{ref3}$ gelegt.

Der Begrenzer B besteht somit aus den Emitterfolgern T7 und T8, aus der Stromquelle $I_1$ und aus dem Stromspiegel T5, T6. Begrenzt wird die Ausgangsspannung $U_A$ des Regelverstärkers RV des Regelverstärkers, um den Schaltnetzteil kurzschlussfest zu machen. Die Ausgangsstufe des Regelverstärkers RV besteht aus dem bereits genannten npn-Transistor T9 und seiner Laststromquelle $I_2$, die an das als Versorgungspotential für die Regelschaltung RS dienende Potential $U_{ref2}$ geschaltet ist.

Ist nun $I_{kUA}$ = Null, so wird, da die Emitter-Basisspannung $U_{BE7}$ von T7 gleich der Emitter-Basisspannung $U_{BE8}$ von T8 ist, und ausserdem $I_{B7} \cdot R*$ etwa gleich Null ist, die Spannung $U_A$ an $U_{ref3}$ geklemmt. Durch die Korrekturschaltung KS bewirkt der eingespeiste Strom $I_{kUA}$, dass das Klemmpotential mit steigendem Wert von $I_{kUA}$ sinkt. Durch entsprechende Ausgestaltungen des Korrekturnetzwerks KN, wie sie aus Fig. 4a und 4b angegeben ist, kann damit die Gleichung (10) ohne weiteres erfüllt und das von der Erfindung angestrebte Verhalten des Schaltnetzteils erreicht werden.

Um die beiden beschriebenen Korrekturmöglichkeiten auszunutzen, wird die Kontrollschaltung KS sowohl zur Steuerung eines Strom-Spannungswandlers gemäss Fig. 4 als auch zur Steuerung eines Regelverstärkers RV entsprechend Fig. 5 verwendet. Eine solche Steuerung bringt den Vorteil, dass die Stabilisierung des $I_s$-Knickpunkts durch mehrere Parameter beeinflusst werden kann. Die Korrektur kann damit präziser über einen weiteren Bereich der Primärspannung $U_p$ erfolgen.

Zusammenfassend kann somit festgestellt werden, dass der mit einer Korrekturschaltung KS entsprechend der Definition der Erfindung und dem dazugehörigen Spannungsteiler ST ausgestattete Schaltnetzteil, wie er z.B. in Fig. 3 dargestellt ist, den Vorteil hat, dass der $I_s$-Knickpunkt und damit die maximal abgegebene Sekundärleistung konstant bleibt. Eine präzise Korrektur des $I_s$-Knickpunkts ist jedoch in der Praxis nur in seltenen Fällen erforderlich, so dass eine Darstellung der Korrekturmöglichkeiten sowie der zu ihrer Realisierung mit einfachen Mitteln möglichen Schaltung ausreicht, um auch den Erfolg der Erfindung zu gewährleisten.

Zum Schlusse dieser Betrachtungen soll noch ein Dimensionierungsbeispiel gebracht werden:

$U_{ref1}$ = 1 V; $U_{ref2}$ = 10 V; $U_{ref3}$ = 3 V;

$I = I_1 = I_2$ = 100 µA;

R = 270 Kiloohm; R1 = 270 Kiloohm; R2 = 12 Kiloohm; R* = 5 Kiloohm; r = 4 7 Kiloohm;

C = 4,7 nF;

ZD = eine 4,7 V-Zenerdiode.

In dieser Ausgestaltung lassen sich alle Elemente des Stromspannungswandlers, des Regelverstärkers und der Korrekturschaltung mit Ausnahme von R, C und KN ohne Schwierigkeiten monolitisch zusammenfassen. Die Erfindung wurde u.a. mit den soeben angegebenen Daten mit sehr gutem Erfolg realisiert.

**Patentansprüche**

1. Sperrwandler-Schaltnetzteil für die Versorgung eines elektrischen Geräts, bei dem die Primärwicklung ($U_p$) eines Transformators (Tr) in Serie mit der stromführenden Strecke eines elektronischen Schalters (T) an die durch Gleichrichtung der über zwei Versorgungsanschlüsse zugeführten Netzwechselspannung erhaltene Gleichspannung ($U_p$) gelegt und eine Sekundärwicklung ($W_s$) des Transformators (Tr) zur Stromversorgung des elektrischen Geräts vorgesehen ist, bei dem ausserdem die Steuerelektrode des dreipoligen elektronischen Schalters (T) durch den Ausgang einer Regelschaltung (RS) gesteuert ist, die ihrerseits durch die gleichgerichtete Netzwechselspannung ($U_p$) über einen Strom-Spannungswandler (SSW) als Istwert und durch einen Sollwertgeber beaufschlagt ist, bei der ferner eine Anlaufschaltung zur weiteren Steuerung der Steuerelektrode des elektronischen Schalters (T) vorgesehen ist, und bei der schliesslich die Regelschaltung derart aufgebaut ist, dass ihre Stromversorgung mittels einer weiteren Sekundärwicklung ($W_H$) des Transformators (Tr) gegeben ist, die einerseits einen der Regelspannungserzeugung dienenden Schaltungsteil mit einem nachgeschalteten Regelverstärker (RV) und andererseits einen der Impulsaufbereitung dienenden Schaltungsteil (IAB) enthält, wobei sowohl der Ausgang des Regelverstärkers (RV) als auch der Ausgang der Impulsaufbereitungsanlage (IAB) an je einen Eingang ($U_A$, $U_N$) eines die Steuerelektrode des elektronischen Schalters (Tr) beaufschlagenden und den Ausgang der Regelschaltung bildenden Pulsdauer-Modulators (PDM) geschaltet ist, während ein dritter Eingang ($U_{Ip}$) des Pulsdauer-Modulators (PDM) von dem Strom-Spannungswandler (SSW) beaufschlagt ist, dadurch gekennzeichnet, dass das dem dreipoligen elektronischen Schalter (T) abgewandte Ende der Primärwicklung ($W_p$) des Transformators (Tr) über einen Spannungsteiler (ST) mit dem Bezugspotentialanschluss verbunden und wenigstens ein Teilerpunkt des Spannungsteilers (ST) an den Eingang einer Korrekturschaltung (KS) gelegt ist, die ihrerseits zur Steuerung des Regelverstärkers (RV) und/oder der Istwertsteuerung, d.h. des Strom-Spannungswandlers (SSW) in der Regelschaltung (RS) vorgesehen und derart ausgestaltet ist, dass aufgrund der von ihr bewirkten Steuerung ein vorgegebenes Maximum für die an der Sekundärwicklung ($W_s$) des Transformators (Tr) entnehmbare Leistung unabhängig von der Versorgungsspannung ($U_p$) wird.

2. Sperrwandler-Schaltnetzteil nach Anspruch 1, dadurch gekennzeichnet, dass der dreipolige elektronische Schalter (T) durch einen Leistungstransistor, insbesondere vom npn-Typ, gegeben ist, dessen Emitter am Bezugspotential, dessen Kollektor an der Primärwicklung ($W_p$) des Transformators (Tr) und dessen Basis am Ausgang des Pulsdauer-Modulators (PDM) liegt.

3. Sperrwandler-Schaltnetzteil nach Anspruch 1 oder 2, dadurch gekennzeichnet, dass der Eingang der Korrekturschaltung (KS) durch die Basis eines ersten pnp-Transistors (T1) gegeben ist, die durch den Teilerpunkt des aus den beiden Widerständen (R1, R2) gebildeten Spannungsteilers (ST) beaufschlagt ist, während der Kollektor des pnp-Transistors (T1) am Bezugspotential und sein Emitter an einem Knoten liegt, von dem aus ein Zweig über eine Konstantstromquelle (I) an den Anschluss für das Versorgungspotential ($U_{ref2}$) der Regelschaltung (RS) und der andere Zweig an die Basis eines npn-Transistors (T2) führt, dass dabei der Emitter des npn-Transistors (T2) über ein Korrekturnetzwerk (KN) mit dem Anschluss für das Bezugspotential verbunden und der Kollektor des npn-Transistors (T2) an den Eingang eines pnp-Stromspiegelverstärkers (T3, T4) gelegt ist, dessen Fusspunkt an dem Anschluss für das Versorgungspotential ($U_{ref2}$) liegt und dessen Ausgang (T4) den Ausgang der Korrekturschaltung (KS) bildet.

4. Sperrwandler-Schaltnetzteil nach Anspruch 3, dadurch gekennzeichnet, dass der Strom-Spannungswandler (SSW) durch die Kombination eines Operationsverstärkers (V) mit einem Widerstand (R) und einem Kondensator (C) gegeben ist, wobei der Kondensator mit dem einen Anschluss am Bezugspotential und dem anderen Anschluss an einen den Ausgang des Strom-Spannungswandlers (SSW) bildenden Knoten gelegt ist, der einerseits am Ausgang sowie am invertierenden Eingang des Operationsverstärkers liegt und andererseits über den Widerstand (R) mit demjenigen Anschluss der Primärwicklung ($W_p$) des Transformators (Tr) verbunden ist, an dem auch der zur Beaufschlagung der Korrekturschaltung (KS) vorgesehene Spannungsteiler (ST) liegt, und dass der besagte Knoten einerseits am Ausgang (T4) der Korrekturschaltung (KS) und andererseits an dem für die Beaufschlagung durch den Strom-Spannungswandler (SSW) vorgesehenen Eingang des Pulsdauer-Modulators (PDM) liegt, während der nichtinvertierende Eingang des Operationsverstärkers (V) durch ein Referenzpotential ($U_{ref1}$) beaufschlagt ist.

5. Sperrwandler-Schaltnetzteil nach einem der Ansprüche 3 oder 4, dadurch gekennzeichnet, dass der Ausgang der Kontrollschaltung (KS) an den Eingang eines einen Bestandteil einer im Regelverstärker (RV) vorgesehenen Begrenzerschaltung (B) bildenden npn-Stromspiegelverstärkers (T5, T6) gelegt ist, dessen Ausgang über einen Widerstand (R*) an ein Referenzpotential ($U_{ref3}$) gelegt ist, an das die Ausgangsspannung $U_A$ des Regelverstärkers (RV) geklemmt wird und dessen Fusspunkt am Bezugspotential liegt, dass ausserdem der Ausgang des npn-Stromspiegelverstärkers (T5, T6) zur Steuerung der Basis eines npn-Transistors (T7) dient, dessen Emitter über eine Konstantstromquelle ($I_1$) am Bezugspotentialanschluss und dessen Kollektor an einem weiteren Referenzanschluss ($U_{ref2}$) liegt, dass dabei der Emitter des npn-Transistors (T7) zur Steuerung eines pnp-Transistors (T8) dient, dessen Kollektor ebenfalls am Bezugspotential und dessen Emitter am Kollektor des Ausgangstransistors (T9) des Regelverstärkers (RV) liegt, der seinerseits als npn-Transistor ausgestaltet ist und an seinem ausser der genannten Verbindung zum pnp-Transistor (T8) noch eine Verbindung zum Pulsdauer-Modulator (PDM) sowie an den Ausgang einer weiteren Konstantstromquelle ($I_2$) aufweist, während die Basis des zuletzt genannten npn-Transistors (T9) als Eingang des Regelverstärkers (RV) dient und der Eingang der Konstantstromquelle ($I_2$) am Anschluss des Kollektors des durch den npn-Stromspiegel (T5, T6) gesteuerten npn-Transistors (T7) liegt.

6. Sperrwandler-Schaltnetzteil nach einem der Ansprüche 3 bis 5, dadurch gekennzeichnet, dass das in der Korrekturschaltung (KS) vorgesehene Korrekturnetzwerk (KN) aus der Reihenschaltung und/oder Parallelschaltung eines Widerstandes (r) mit wenigstens einer — ggf. als Zenerdiode ausgebildeten — Diode besteht.

**Claims**

1. A flyback-converter switch-mode power supply unit for an electrical device, where the primary winding $(W_p)$ of a transformer (Tr) is connected in series with the current-conducting path of an electronic switch (T) across a d.c. voltage $(U_p)$ obtained by rectification of the mains a.c. voltage supplied via two supply terminals, a secondary winding $(W_s)$ of the transformer (Tr) provides the current supply for the electrical device, the control electrode of the three-pole electronic switch (T) is controlled by the output of a regulating circuit (RS) which is itself supplied via a current-voltage converter (SSW) with the rectified mains a.c. voltage $(U_p)$ as an actual value, and is connected to a theoretical value generator, moreover where a starting circuit is provided for the further control of the control electrode of the electronic switch (T) and where, finally, the regulating circuit is constructed such that its current supply is provided by a further secondary winding $(W_H)$ of the transformer, which secondary winding contains a circuit component which generates the regulating voltage, followed by a regulating amplifier (RV), and also contains a circuit component (IAB) which prepares the pulses, where both the output of the regulating amplifier (RV) and the output of the pulse preparation unit (IAB) are connected to an input $(U_A, U_N)$ of a pulse-duration modulator (PDM) which forms the output of the regulating circuit and acts upon the control electrode of the electronic switch (Tr), whereas a third input $(U_{TP})$ of the pulse duration modulator (PDM) is acted upon by the current-voltage converter (SSW), characterised in that the end of the primary winding $(W_p)$ of the transformer (Tr) remote from the three-pole electronic switch (T) is connected via a voltage divider (ST) to the reference potential terminal and at least one tapping of the voltage divider (ST) is connected to the input of a correcting circuit (KS) which itself serves to control the regulating amplifier (RV) and/or the actual value control, i.e. the current-voltage converter (SSW) in the regulating circuit (RS), and which is designed to be such that on the basis of its control a predetermined maximum for the power which can be tapped from the secondary winding $(W_s)$ of the transformer (Tr) becomes independent of the supply voltage $(U_p)$.

2. A flyback-converter switch-mode power supply unit as claimed in claim 1, characterised in that the three-pole, electronic switch (T) consists of a power transistor, in particular of the npn-type, the emitter of which is connected to reference potential, the collector of which is connected to the primary winding $(W_p)$ of the transformer (Tr) and the base of which is connected to the output of the pulse-duration modulator (PDM).

3. A flyback-converter switch-mode power supply unit as claimed in claim 1 or 2, characterised in that the input of the correcting circuit (KS) is formed by the base of a first pnp-transistor (T1) which is acted upon by the tapping of the voltage divider (ST), which consists of the two resistors (R1, R2), whilst the collector of the npn-transistor (T1) is connected to reference potential and its emitter is connected to a node from which one arm leads via a constant current source (I) to the terminal for the supply potential $(U_{ref2})$ of the regulating circuit (RS) and the other arm leads to the base of an npn-transistor (T2), that the emitter of the npn-transistor (T2) is connected via a correcting network (KN) to the reference potential terminal and the collector of the npn-transistor (T2) is connected to the input of a pnp-current reflector amplifier (T3, T4) whose foot-print is connected to the terminal for the supply potential $(U_{ref2})$ and whose output (T4) forms the output of the correcting circuit (KS).

4. A flyback-converter switch-mode power supply unit as claimed in claim 3, characterised in that the current-voltage converter (SSW) is formed by the combination of an operational amplifier (V) with a resistor (R) and a capacitor (C), where the capacitor has one electrode connected to the reference potential and the other to a node which forms the output of the current-vontage converter (SSW) and which is connected both to the output and the inverting input of the operational amplifier and also via the resistor (R) to that terminal of the primary winding $(W_p)$ of the transformer (Tr) to which is connected the voltage divider (ST) which acts upon the correcting circuit (KS), and that the aforesaid node is connected to the output (T4) of the correcting circuit (KS) and also to that input of the pulse-duration modulator (PDM) acted upon by the current-voltage converter (SSW), whilst the noninverting input of the operational amplifier (V) is supplied with a reference potential $(U_{ref1})$.

5. A flyback-converter switch-mode power supply unit as claimed in one of claims 3 or 4, characterised in that the output of the control circuit (KS) is connected to the input of an npn-current reflector amplifier (T5, T6) which forms part of a limiter circuit (B) contained in the regulating amplifier (RV) and whose output is connected via a resistor (R*) to a reference potential $(U_{ref3})$ to which the output voltage $(U_A)$ of the regulating amplifier (RV) is connected and whose foot-print is connected to the reference potential, that moreover the output of the npn-current reflector amplifier (T5, T6) serves to control the base of an npn-transistor (T7) whose emitter is connected via a constant current source $(I_1)$ to the reference potential terminal and whose collector is connected to a further reference terminal $(U_{ref2})$, that the emitter of the npn-transistor (T7) serves to control a pnp-transistor (T8) whose collector is connected to the reference potential and whose emitter is connected to the collector of the output transistor (T9) of the regulating amplifier (RV), which is itself an npn-transistor connected to the pnp-transistor (T8), to the pulse-duration modulator (PDM) and to the output of a further constant current source $(I_2)$, whilst the base of the aforesaid npn-transistor (T9) serves as an input for the regulating amplifier (RV), and the input of the constant current source $(I_2)$ is connected to the collector of the npn-transistor (T7), which is controlled by the npn-current reflector (T5, T6).

6. A flyback-converter switch-mode power supply unit as claimed in one of claims 3 to 5, characterised in that the correcting network (KN) contained in the correcting circuit (KS) consists of the series and/or parallel arrangement of a resistor (r) with at least one diode, which may be a Zener diode.

## Revendications

1. Bloc d'alimentation à convertisseur à oscillateur bloqué pour l'alimentation d'un appareil électrique, dans lequel l'enroulement primaire ($W_p$) d'un transformateur (Tr), qui est en série avec la voie conduisant le courant d'un interrupteur électronique (T), est raccordé à la tension continu ($U_p$) obtenue par redressement de la tension alternative du réseau envoyée par l'intermédiaire de deux bornes d'alimentation, et un enroulement secondaire ($W_s$) du transformateur (Tr) est prévu pour l'alimentation en courant de l'appareil électrique, et dans lequel, en outre, l'électrode de commande de l'interrupteur électronique (T) à trois pôles est commandée par la sortie d'un circuit de réglage (RS) qui pour sa part est chargé par la tension alternative du réseau ($U_p$) redressée, en tant que valeur réelle, par l'intermédiaire d'un convertisseur courant-tension (SSW), et par un générateur de valeur de consigne, et dans lequel, en outre, il est prévu un circuit de démarrage pour la commande ultérieure de l'électrode de commande de l'interrupteur électronique (T) et dans lequel enfin le circuit de réglage est constitué de telle façon que son alimentation en courant est fournie au moyen d'un enroulement secondaire ($W_H$) du transformateur (Tr), qui, comporte d'une part une partie de circuit, avec amplificateur de réglage aval, servant à produire la tension de réglage, et d'autre part une partie de circuit (IAB) servant à préparer des impulsions, aussi bien la sortie de l'amplificateur de réglage (RV) que la sortie de l'installation (IAB) de préparation des impulsions étant raccordées respectivement à une entrée ($U_A$, $U_N$) d'un modulateur d'impulsions en durée (PDM) chargeant l'électrode de commande de l'interrupteur électronique (Ta) et constituant la sortie du circuit de réglage, tandis qu'une troisième entrée ($U_{lp}$) du modulateur d'impulsions en durée (PDM) est chargée par le convertisseur courant-tension (SSW), caractérisé par le fait que l'extrémité de l'enroulement primaire ($W_p$) du transformateur (Tr), qui est située à l'opposé de l'interrupteur électronique (T) à trois pôles, est reliée par l'intermédiaire d'un diviseur de tension (ST) à la borne du potentiel de référence et qu'au moins un point de division du diviseur de tension (ST) est raccordé à l'entrée du circuit de correction (KS) qui, pour sa part, est prévu pour la commande de l'amplificateur de réglage (RV) et/ou pour la commande de la valeur réelle, c'est-à-dire du convertisseur courant-tension (SSW) dans le circuit de réglage (RS) et est agencé de telle sorte que, sur la base de la commande qu'il exécute, un maximum prédéterminé pour la puissance pouvant être prélevée sur l'enroulement secondaire ($W_s$) du transformateur (Tr), devient indépendant de la tension d'alimentation ($U_p$).

2. Bloc d'alimentation à convertisseur à oscillateur bloqué suivant la revendication 1, caractértisé par le fait que l'interrupteur électronique (T) à trois pôles est formé par un transistor de puissance, notamment du type npn, dont l'émetteur est placé au potentiel de référence, dont le collecteur est raccordé à l'enroulement primaire ($W_p$) du transformateur (Tr) et dont la base est raccordé à la sortie du modulateur d'impulsions en durée (PDM).

3. Bloc d'alimentation à convertisseur à oscillateur bloqué suivant la revendication 1 ou 2, caractérisé par le fait que l'entrée du circuit de correction (KS) est formée par la base d'un premier transistor pnp (T1), qui est chargé par le point de division du diviseur de tension (ST) formé par les deux résistances (R1, R2) tandis que le collecteur du transistor pnp (T1) est placé au potentiel de référence et que son émetteur est raccordé à un noeud à partir duquel une branche comportant une source de courant constant (I) est raccordée à la borne délivrant le potentiel d'alimentation ($U_{ref2}$) du circuit de réglage (RS) et l'autre branche est raccordée à la base d'un transistor npn (T2), que l'émetteur du transistor npn (T2) est reliée par l'intermédiaire d'un réseau de correction (KN) à la borne délivrant le potentiel de référence et que le collecteur du transistor npn (T2) est raccordé à l'entrée d'un amplificateur à courant symétrique pnp (T3, T4), dont le point de base est raccordé à la borne délivrant le potentiel d'alimentation ($U_{ref2}$) et dont la sortie (T4) constitue la sortie du circuit de correction (KS).

4. Bloc d'alimentation à convertisseur à oscillateur bloqué suivant la revendication 3, caractérisé par le fait que le convertisseur courant-tension (SSW) est formé par la combinaison d'un amplificateur opérationnel (B) muni d'une résistance (T1) et d'un condensateur (C), le condensateur étant raccordé par une borne au potentiel de référence et par l'autre borne à un noeud constituant la sortie du convertisseur courant-tension (SSW) qui, pour sa part, est raccordé à la sortie ainsi qu'à l'entrée inverseuse de l'amplificateur opérationnel et d'autre part est relié par l'intermédiaire de la résistance (R) à la borne de l'enroulement primaire ($W_p$) du transformateur (Tr), à laquelle également se trouve raccordé le diviseur de tension (ST) prévu, pour le chargement du circuit de correction (KS), et que ledit noeud est raccordé d'une part à la sortie (T4) du circuit de correction (KS) et d'autre part à l'entrée du modulateur d'impulsions en durée (PDM), prévue pour être chargée par le convertisseur courant-tension (SSW), tandis que l'entrée non inverseuse de l'amplificateur opérationnel (V) est chargée par un potentiel de référence ($U_{ref1}$).

5. Bloc d'alimentation à convertisseur à oscillateur bloqué suivant l'une des revendications 3 ou 4, caractérisé par le fait que la sortie du circuit de contrôle (KS) est raccordée à l'entrée d'un amplificateur à courant symétrique, npn (T5, T6) faisant partie d'un circuit limiteur (B) prévu dans l'amplificateur de réglage (RV) et dont la sortie est placée par l'intermédiaire d'une résistance (R*) à un potentiel de référence ($U_{ref3}$), sur lequel la tension de sortie ($U_A$) de l'amplificateur de réglage (RV) est verrouillée, et dont le point de base est placé au potentiel de référence, qu'en outre la sortie de l'amplificateur à courant symétrique npn (T5, T6) est utilisée pour la commande de la base d'un transistor npn (T7), dont l'émetteur est raccordé par l'intermédiaire d'une source de courant constant ($I_1$) à la borne délivrant le potentiel de référence et dont le collecteur est raccordé à une autre borne de référence ($U_{ref2}$), que l'émetteur du transistor npn (T7) est utilisé pour la commande d'un transistor pnp (T8), dont le collecteur est également placé au potentiel de référence et dont l'émetteur est raccordé au collecteur du transistor d'entrée (T9) de l'amplificateur de réglage (RV) qui pour sa part est réalisé sous la forme d'un transistor npn et qui comporte, en-dehors de la liaison indiquée avec le transistor pnp (T8), également une liaison avec le modulateur d'impulsions en durée (PDM) et possède, sur sa sortie, une autre source de courant constant ($I_2$), tandis que la base du transistor (T9) indiqué en dernier sert d'entrée pour l'amplificateur de réglage (RV) et que l'entrée de la source de courant constant ($I_2$) est raccordée à la borne du collecteur du transistor npn (S1) commandé par le miroir de courant npn (T5, T6).

6. Bloc d'alimentation à convertisseur à oscillateur bloqué suivant l'une des revendications 3 à 5, caractérisé par le fait que le réseau de correction (KN) prévu dans le circuit de correction (KS) est constitué par le montage en série et/ou le montage en parallèle d'une résistance (r) avec au moins une diode — réalisée éventuellement sous la forme d'une diode Zener.

FIG 1

FIG 2

$U_H$

$U_N$

$U_N > 0$ heißt:
S bleibt offen

$U_N < 0$ heißt:
S wird geschlossen
(Impulsstart)

$I_{p\,max}$

$I_p$

$UI_{p\,max}$

$UI_p$

Sperrphase — Leitph.

Sist offen | Sist geschlossen

# FIG 3

# FIG 4a

# FIG 4b

# FIG 4

# FIG 5